# EUROPEAN PATENT APPLICATION

(11) **EP 4 842 044 A1**
(43) Date of publication of application: **18.11.2026**
(21) Application number: 24915902.1
(22) Date of filing: 08.01.2024
(51) Int. Cl.: H04W 24/10

(54) **SIDELINK TRANSMISSION METHOD AND TERMINAL DEVICES**

(71) Applicant: GUANGDONG OPPO MOBILE TELECOMMUNICATIONS CORP., LTD., Dongguan, Guangdong 523860 (CN)
(72) Inventor: MA, Teng, Dongguan, Guangdong 523860 (CN); ZHANG, Shichang, Dongguan, Guangdong 523860 (CN); ZHAO, Zhenshan, Dongguan, Guangdong 523860 (CN)
(74) Representative: Penza, Giancarlo
(86) International application number: PCT/CN2024/071182
(87) International publication number: WO 2025/147820

(57) **Abstract**

A sidelink transmission method and a terminal device are provided. The sidelink transmission method includes: transmitting, by a terminal device, first SCI on a first carrier; and transmitting, by the terminal device, a first SL-PRS associated with the first SCI on a second carrier. In the embodiments of the present disclosure, SCI and an SL-PRS associated with the SCI are transmitted on different carriers, thereby helping relieve resource congestion.

## Description

### TECHNICAL FIELD

The present disclosure relates to the technical field of communication, and more particularly, to a sidelink transmission method and a terminal device.

### BACKGROUND

In a sidelink transmission scenario, a sidelink positioning reference signal (SL-PRS) may be indicated/scheduled based on sidelink control information (SCI). At present, resource congestion is prone to occur during transmission of an SL-PRS. Therefore, how to alleviate resource congestion is an issue to be addressed.

### SUMMARY

The present disclosure provides a sidelink transmission method and a terminal device. Various aspects related to the present disclosure are described below.

In a first aspect, a sidelink transmission method is provided, including that: a terminal device transmits first SCI on a first carrier; and the terminal device transmits a first SL-PRS associated with the first SCI on a second carrier.

In a second aspect, a terminal device is provided, including: a first transmission unit configured to transmit first SCI on a first carrier; and a second transmission unit configured to transmit a first SL-PRS associated with the first SCI on a second carrier.

In a third aspect, a terminal device is provided, including a transceiver, a memory and a processor, wherein the memory is configured to store a program, and the processor is configured to invoke the program in the memory and control the transceiver to receive or transmit signals, such that the terminal device performs the method according to the first aspect.

In a fourth aspect, an apparatus is provided, including a processor configured to invoke a program from a memory, such that the apparatus performs the method according to the first aspect.

In a fifth aspect, a chip is provided, including a processor configured to invoke a program from a memory, such that a device installed with the chip performs the method according to the first aspect.

In a sixth aspect, a computer-readable storage medium is provided, which has a program stored thereon that causes a computer to perform the method according to the first aspect.

In a seventh aspect, a computer program product is provided, including a program which causes a computer to perform the method according to the first aspect.

In an eighth aspect, a computer program is provided, which causes a computer to perform the method according to the first aspect.

Embodiments of the present disclosure transmit SCI and an SL-PRS associated with the SCI using different carriers, thereby helping to alleviate resource congestion.

### BRIEF DESCRIPTION OF THE DRAWINGS

Fig. 1 is an exemplary diagram of a system architecture of a wireless communication system to which embodiments of the present disclosure are applicable.
Fig. 2 is an exemplary diagram of a sidelink communication scenario within network coverage.
Fig. 3 is an exemplary diagram of a sidelink communication scenario with partial network coverage.
Fig. 4 is an exemplary diagram of a sidelink communication scenario outside network coverage.
Fig. 5 is an exemplary diagram of a sidelink communication scenario based on a central control node.
Fig. 6 is an exemplary diagram of a broadcast-based sidelink communication manner.
Fig. 7 is an exemplary diagram of a unicast-based sidelink communication manner.
Fig. 8 is an exemplary diagram of a multicast-based sidelink communication manner.
Fig. 9A is an exemplary diagram of a slot structure used for a sidelink communication system.
Fig. 9B is another exemplary diagram of a slot structure used for a sidelink communication system.
Fig. 10 is an exemplary diagram of a time-domain relationship between a physical sidelink shared channel demodulation reference signal (PSSCH DM-RS) and second-stage sidelink control information (SCI).
Fig. 11 is a comparison diagram of slot structures corresponding to multiple transmissions of a PSSCH.
Fig. 12 is an exemplary diagram of a mapping manner of a physical sidelink control channel (PSCCH) DM-RS.
Fig. 13 is an exemplary diagram of a time-domain mapping manner of a PSSCH DM-RS.
Fig. 14 is an exemplary diagram of a frequency-domain mapping manner of a PSSCH DM-RS.
Fig. 15 is an exemplary diagram of a mapping manner of a channel state information reference signal (CSI-RS) in a sidelink.
Fig. 16 is an exemplary diagram of a listen before talk (LBT) procedure.
Fig. 17 is a schematic flowchart of a sidelink transmission method provided by an embodiment of the present disclosure.
Fig. 18 is an exemplary diagram of a manner of indicating an SL-PRS provided by an embodiment of the present disclosure.
Fig. 19 is an exemplary diagram of a manner of indicating an SL-PRS provided by another embodiment of the present disclosure.
Fig. 20 is an exemplary diagram of a manner of indicating an SL-PRS provided by still another embodiment of the present disclosure.
Fig. 21 is an exemplary diagram of a manner of indicating an SL-PRS provided by still another embodiment of the present disclosure.
Fig. 22 is a schematic structural diagram of a terminal device provided by an embodiment of the present disclosure.
Fig. 23 is a schematic structural diagram of an apparatus provided by an embodiment of the present disclosure.

### DETAILED DESCRIPTION

### Architecture of Communication System

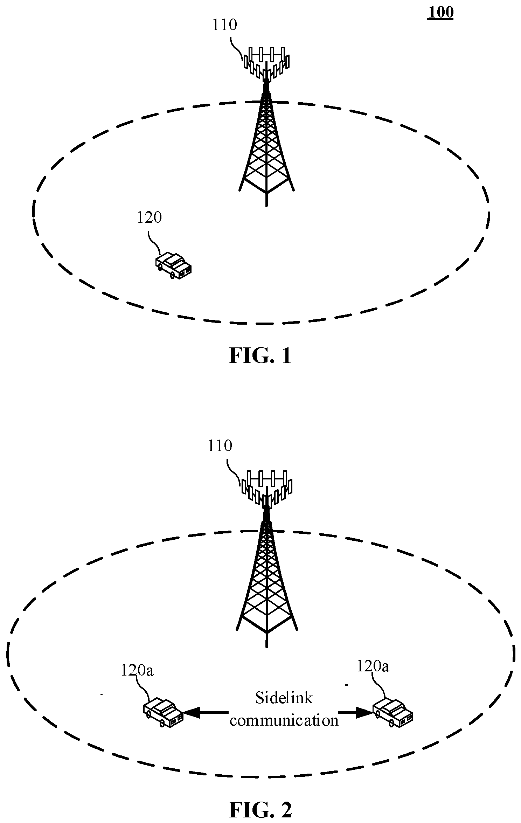

Fig. 1 is an exemplary diagram of a system architecture of a wireless communication system 100 to which embodiments of the present disclosure are applicable. The wireless communication system 100 may include a network device 110 and a terminal device 120. The network device 110 may be a device that communicates with the terminal device 120. The network device 110 may provide communication coverage for a specific geographical area, and may communicate with the terminal device 120 located within the coverage area.

Fig. 1 exemplarily shows one network device and one terminal device. Optionally, the wireless communication system 100 may include one or more network devices 110 and/or one or more terminal devices 120. For one network device 110, the one or more terminal devices 120 may all be located within the network coverage of the network device 110, or may all be located outside the network coverage of the network device 110, or may partially be located within the coverage of the network device 110 and partially be outside the network coverage of the network device 110, which is not limited in the embodiments of the present disclosure.

Optionally, the wireless communication system 100 may further include other network entities such as a network controller, a mobility management entity, etc., which is not limited in the embodiments of the present disclosure.

It should be understood that the technical solutions of the embodiments of the present disclosure may be applied to various communication systems, for example: a 5th generation (5G) system or new radio (NR), a long term evolution (LTE) system, an LTE frequency division duplex (FDD) system, an LTE time division duplex (TDD), etc. The technical solutions provided in the present disclosure may also be applied to future communication systems, such as a sixth generation mobile communication system, a satellite communication system, and so on.

The terminal device in the embodiments of the present disclosure may also be referred to as user equipment (UE), an access terminal, a subscriber unit, a subscriber station, a mobile site, a mobile station (MS), a mobile terminal (MT), a remote station, a remote terminal device, a mobile device, a user terminal, a wireless communication device, a user agent, or a user apparatus. The terminal device in the embodiments of the present disclosure may be a device configured to provide a user with voice and/or data connectivity, and may be used to connect people, things and machines, such as a handheld device with a wireless connection function, an in-vehicle device, etc. The terminal device in the embodiments of the present disclosure may be a mobile phone, a tablet computer (Pad), a laptop computer, a palmtop computer, a mobile internet device (MID), a wearable device, a vehicle, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, etc. For example, a terminal device may act as a scheduling entity that provides sidelink signals between terminal devices in vehicle-to-everything (V2X) or device-to-device (D2D) communication, etc. For instance, a cellular phone and a car may communicate with each other using sidelink signals. A cellular phone may communicate with a smart home device without relaying communication signals through a base station. Optionally, the terminal device may be configured to act as a base station.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that may connect a terminal device to a wireless network. A base station may broadly cover various names of the following, or be replaced with the following names, such as: NodeB, evolved NodeB (eNB), next generation NodeB (gNB), a relay station, an access point, a transmission and receiving point (TRP), a transmitting point (TP), a master eNB (MeNB), a secondary eNB (SeNB), a multi-standard radio (MSR) node, a home base station, a network controller, an access node, a radio node, an access point (AP), a transmission node, a transmit-receive node, a base band unit (BBU), a remote radio unit (RRU), an active antenna unit (AAU), a remote radio head (RRH), a central unit (CU), a distributed unit (DU), a positioning node, etc. A base station may be a macro base station, a micro base station, a relay node, a donor node, or the like, or a combination thereof. A base station may also refer to a communication module, a modem, or a chip disposed in the aforementioned devices or apparatuses. A base station may also be a mobile switching center and a device undertaking base station functions in device-to-device (D2D), V2X, machine-to-machine (M2M) communication, a network-side device in a 6G network, a device undertaking base station functions in a future communication system, etc. A base station may support networks of the same or different access technologies. The embodiments of the present disclosure do not limit the specific technology and specific device form adopted by the network device.

A base station may be fixed or mobile. For example, a helicopter or an unmanned aerial vehicle may be configured to act as a mobile base station, and one or more cells may move according to the location of the mobile base station. In other examples, a helicopter or an unmanned aerial vehicle may be configured to act as a device that may communicate with another base station.

In some deployments, the network device in the embodiments of the present disclosure may refer to a CU or a DU, or the network device includes a CU and a DU. A gNB may further include an AAU.

The network device and the terminal device may be deployed on land, including indoors or outdoors, handheld or vehicle-mounted; may also be deployed on water; and may also be deployed on aircraft, balloons, and satellites in the air. The embodiments of the present disclosure do not limit the scenarios where the network device and the terminal device are located.

### Sidelink Communication Under Different Network Coverage Scenarios

Sidelink communication refers to a communication technology based on a sidelink. Sidelink communication may be, for example, device-to-device (D2D) or vehicle-to-everything (V2X) communication. Communication data in a traditional cellular system may be received or transmitted between a terminal device and a network device, while sidelink communication supports direct communication data transmission between terminal devices. Compared with traditional cellular communication, direct transmission of communication data between terminal devices may have higher spectrum efficiency and lower transmission delay. For example, a vehicle networking system adopts the sidelink communication technology.

In sidelink communication, sidelink communication may be classified into sidelink communication within network coverage, sidelink communication with partial network coverage, and sidelink communication outside network coverage according to the network coverage scenarios where a terminal device is located.

Fig. 2 is an exemplary diagram of a sidelink communication scenario within network coverage. In the scenario shown in Fig. 2, two terminal devices 120a are both located within the coverage of the network device 110. Therefore, both terminal devices 120a may receive configuration signaling of the network device 110 (the configuration signaling in the present disclosure may also be replaced with configuration information), and determine sidelink configuration according to the configuration signaling of the network device 110. After both terminal devices 120a perform sidelink configuration, sidelink communication may be performed on the sidelink.

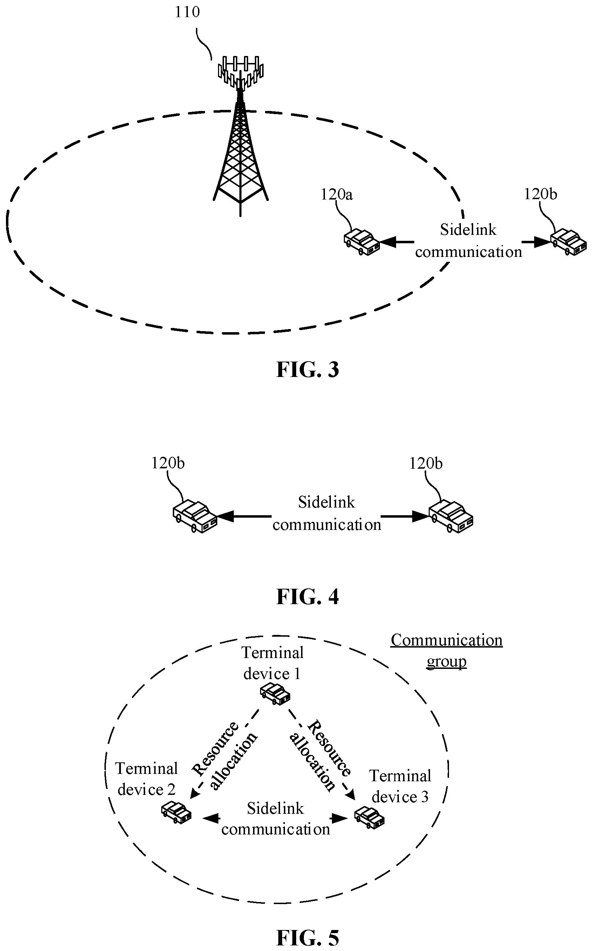

Fig. 3 is an exemplary diagram of a sidelink communication scenario with partial network coverage. In the scenario shown in Fig. 3, a terminal device 120a may perform sidelink communication with a terminal device 120b. The terminal device 120a is located within the coverage of the network device 110, so the terminal device 120a can receive configuration signaling of the network device 110 and determine sidelink configuration according to the configuration signaling of the network device 110. The terminal device 120b is located outside network coverage and cannot receive configuration signaling of the network device 110. In this case, the terminal device 120b may determine sidelink configuration according to pre-configuration information and/or information carried in a physical sidelink broadcast channel (PSBCH) sent by the terminal device 120a located within network coverage. After both the terminal device 120a and the terminal device 120b perform sidelink configuration, sidelink communication may be performed on the sidelink.

Fig. 4 is an exemplary diagram of a sidelink communication scenario outside network coverage. In the scenario shown in Fig. 4, two terminal devices 120b are both located outside network coverage. In this case, both terminal devices 120b may determine sidelink configuration according to pre-configuration information. After both terminal devices 120b perform sidelink configuration, sidelink communication may be performed on the sidelink.

### Sidelink Communication Based on Central Control Node

Fig. 5 is an exemplary diagram of a sidelink communication scenario based on a central control node. In this sidelink communication scenario, multiple terminal devices may form a communication group, and the communication group has a central control node. The central control node may be a terminal device in the communication group (such as terminal device 1 in Fig. 5), which may also be referred to as a cluster header (CH) terminal device. The central control node may be responsible for performing one or more of the following functions: establishment of a communication group, joining and leaving of group members of the communication group, resource coordination within the communication group, allocation of sidelink transmission resources for other terminal devices, reception of sidelink feedback information from other terminal devices, and resource coordination with other communication groups.

### Modes of Sidelink Communication

Some standards or protocols (such as 3rd Generation Partnership Project (3GPP)) have defined two modes of sidelink communication: a first mode and a second mode.

In the first mode, resources of a terminal device (the resources mentioned in the present disclosure may also be referred to as transmission resources, such as time-frequency resources) are allocated by a network device. The terminal device may transmit data on a sidelink according to the resources allocated by the network device. The network device may allocate resources for single transmission to the terminal device, or allocate resources for semi-static transmission to the terminal device. The first mode may be applied to a scenario with network device coverage, such as the scenario shown in Fig. 2 above. In the scenario shown in Fig. 2, the terminal device 120a is located within the network coverage of the network device 110, so the network device 110 may allocate resources used in a sidelink transmission process for the terminal device 120a.

In the second mode, a terminal device may autonomously select one or more resources from a resource pool (RP). Then, the terminal device may perform sidelink transmission based on the selected resources. For example, in the scenario shown in Fig. 4, the terminal device 120b is located outside cell coverage. Therefore, the terminal device 120b may autonomously select resources from a pre-configured resource pool to perform sidelink transmission. Alternatively, in the scenario shown in Fig. 2, the terminal device 120a may also autonomously select one or more resources from a resource pool configured by the network device 110 to perform sidelink transmission.

### Data Transmission Manners of Sidelink Communication

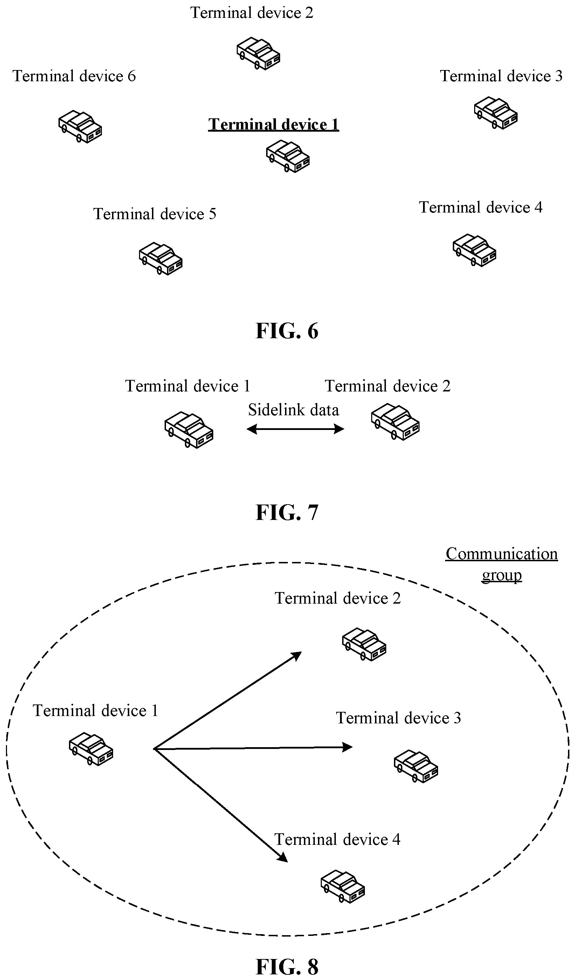

Certain sidelink communication systems (such as long term evolution vehicle to everything (LTE-V2X)) support a broadcast-based data transmission manner (hereinafter referred to as broadcast transmission). For broadcast transmission, a receiving-end terminal may be any terminal device around a transmitting-end terminal. Taking Fig. 6 as an example, terminal device 1 is a transmitting-end terminal, and receiving-end terminals corresponding to the transmitting-end terminal are any terminal devices around terminal device 1, such as terminal device 2 to terminal device 6 in Fig. 6.

In addition to broadcast transmission, certain communication systems also support a unicast-based data transmission manner (hereinafter referred to as unicast transmission) and/or a multicast-based data transmission manner (hereinafter referred to as multicast transmission). For example, new radio vehicle to everything (NR-V2X) is expected to support automatic driving. Automatic driving puts forward higher requirements for data interaction between vehicles. For example, data interaction between vehicles requires higher throughput, lower delay, higher reliability, larger coverage, more flexible resource allocation manners, etc. Therefore, to improve data interaction performance between vehicles, NR-V2X introduces unicast transmission and multicast transmission.

For unicast transmission, there is generally only one terminal device as a receiving-end terminal. Taking Fig. 7 as an example, unicast transmission is performed between terminal device 1 and terminal device 2. Terminal device 1 may be a transmitting-end terminal and terminal device 2 may be a receiving-end terminal, or terminal device 1 may be a receiving-end terminal and terminal device 2 may be a transmitting-end terminal.

For multicast transmission, receiving-end terminals may be terminal devices within a communication group, or receiving-end terminals may be terminal devices within a certain transmission distance. Taking Fig. 8 as an example, terminal device 1, terminal device 2, terminal device 3, and terminal device 4 form a communication group. If terminal device 1 transmits data, other terminal devices in the group (terminal device 2 to terminal device 4) may all be receiving-end terminals.

### Slot Structure of Sidelink Communication

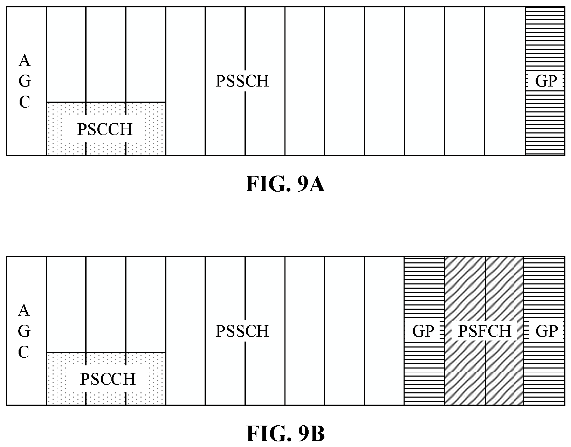

A frame, a subframe, or a slot structure of sidelink communication may be defined for a communication system. Multiple types of slot structures have been defined for sidelink communication systems. For example, two slot structures are defined for NR-V2X. One of the two slot structures does not include a physical sidelink feedback channel (PSFCH), as shown in Fig. 9A; the other one includes a PSFCH, as shown in Fig. 9B.

For a physical sidelink control channel (PSCCH) in NR-V2X, the second sidelink symbol of a slot may be taken as a start position in the time domain, and the PSCCH may occupy 2 or 3 symbols in the time domain (the symbols mentioned herein may all refer to orthogonal frequency division multiplexing (OFDM) symbols). The PSCCH may occupy multiple physical resource blocks (PRBs) in the frequency domain. For example, the number of PRBs occupied by the PSCCH may be selected from the following values: {10, 12, 15, 20, 25}.

To reduce the complexity of blind detection of the PSCCH by a terminal device, generally, only one symbol quantity and one PRB quantity are configured for the PSCCH within one resource pool. In addition, since a sub-channel is taken as a minimum granularity for PSSCH resource allocation in NR-V2X, the number of PRBs occupied by the PSCCH is required to be less than or equal to the number of PRBs included in one sub-channel within the resource pool.

Referring to Fig. 9A, for a slot structure not including a PSFCH, the second sidelink symbol of the slot may be used as a start position in the time domain for a PSSCH in NR-V2X. The last sidelink symbol in the slot is used as a guard period (GP), and the remaining symbols may all be mapped to the PSSCH. The first sidelink symbol in the slot may be a repetition of the second sidelink symbol. Generally, a terminal device serving as a receiving end may use the first sidelink symbol as a symbol for automatic gain control (AGC). Therefore, data on the first sidelink symbol is generally not used for data demodulation. The PSSCH may occupy K sub-channels in the frequency domain, and each sub-channel may include M consecutive PRBs (values of K and M may be predefined by a protocol, pre-configured, configured by a network device, or dependent on terminal device implementation).

Fig. 9B shows a slot structure including a PSFCH. Fig. 9B schematically shows positions of symbols occupied by the PSFCH, the PSCCH, and the PSSCH in one slot. The main difference between this slot structure and that in Fig. 9A is that the penultimate symbol and the third last symbol in the slot are used for transmitting the PSFCH, and in addition, one symbol before the symbol used for transmitting the PSFCH is also used as a GP. It can be seen from the slot structure shown in Fig. 9B that in one slot, the last symbol is used as a GP, the penultimate symbol is used for PSFCH transmission, data on the third last symbol is the same as data on the penultimate symbol used for PSFCH transmission, that is, the third last symbol serves as a symbol for AGC, and the fourth last symbol has the same function as the last symbol and is also used as a GP. In addition, the first symbol in the slot is used for AGC, data on this symbol is the same as data on the second symbol in the slot, the PSCCH occupies 3 symbols, and the remaining symbols may be used for PSSCH transmission.

### Sidelink PSSCH

In certain sidelink communication systems (such as an NR SL system), a PSSCH may be used to carry second-stage SCI (2nd stage SCI) and data information. The format of the second-stage SCI may be, for example, SCI 2-A, SCI 2-B, or SCI 2-C.

The encoding mode of the second-stage SCI may adopt an encoding mode based on polar codes, and modulation may be performed using a quadrature phase shift keying (QPSK) modulation mode.

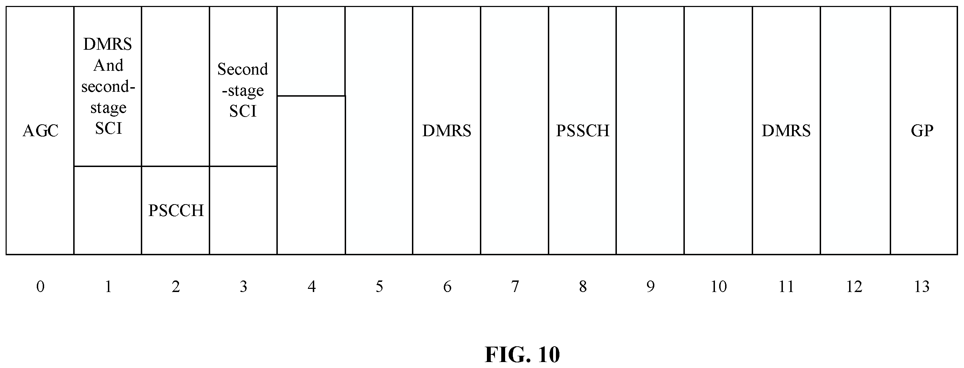

The code rate of the second-stage SCI may be dynamically adjusted within a certain range, and the code rate adopted for the second-stage SCI may be indicated by first-stage SCI. Therefore, even if the code rate of the second-stage SCI changes, a terminal device serving as a receiving end does not need to perform blind detection on the second-stage SCI. Modulation symbols of the second-stage SCI may be mapped in a frequency-domain-first and time-domain-second manner starting from a symbol where a first DM-RS of the PSSCH is located. On a symbol where the DM-RS is located, the second-stage SCI may be mapped to resource elements (REs) not occupied by the DM-RS. Taking Fig. 10 as an example, the second-stage SCI occupies symbols 1 to 4, and the second-stage SCI shares symbol 1 with a first PSCCH DM-RS.

A low density parity check (LDPC) encoding mode may be adopted for data information of the PSSCH. In addition, the highest modulation order currently supported by the PSSCH is 256 quadrature amplitude modulation (QAM).

Within one resource pool, multiple different modulation and coding scheme (MCS) tables may be adopted for data information of the PSSCH. The multiple different MCS tables may include, for example, a regular 64QAM MCS table, a 256QAM MCS table, and a low spectrum efficiency 64QAM MCS table. In one transmission of the PSSCH, an MCS table adopted by a terminal device serving as a transmitting end may be indicated by an "MCS table indication" field in the first-stage SCI.

To control a peak to average power ratio (PAPR), the PSSCH generally needs to be transmitted on consecutive PRBs. In an NR SL system, a sub-channel is a minimum frequency-domain resource granularity of the PSSCH. Therefore, to control PAPR, the NR SL system generally requires the PSSCH to occupy consecutive sub-channels.

Further, in the NR SL system, the PSSCH supports transmission based on dual streams at most, and a precoding matrix of an identity matrix is adopted to map data on two transmission layers corresponding to the dual streams to two antenna ports. Currently, only one transmission block (TB) can be transmitted in one PSSCH at most. When a dual-stream transmission mode is adopted for the PSSCH, modulation symbols of the second-stage SCI on the two streams may be completely the same. This design can ensure reception performance of the second-stage SCI in a highly correlated channel.

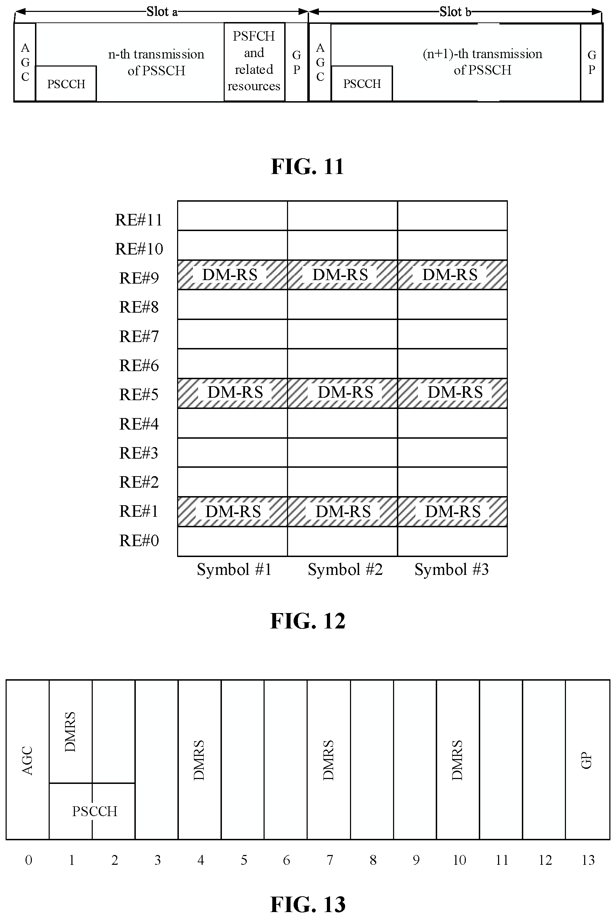

In the NR SL system, a maximum retransmission count of one PSSCH is 32. Therefore, if PSFCH resources exist in a resource pool and a configuration period of the PSFCH resources is 2 or 4, the number of available symbols in a slot where the PSSCH is located may change for multiple transmissions of the same PSSCH. For example, referring to Fig. 11, the nth transmission of the PSSCH is performed in slot a and the (n+1)th transmission of the PSSCH is performed in slot b. It can be seen from Fig. 11 that slot a has PSFCH resources and corresponding related resources (such as AGC symbols and GP symbols corresponding to the PSFCH, which may be specifically described with reference to Fig. 9B), and slot b does not have a PSFCH. Therefore, due to changes in PSFCH resources, the number of available symbols in the slot is different in the nth transmission and the (n+1)th transmission. Changes in available symbols in a slot may cause a transmission block size (TBS) corresponding to the PSSCH to change. Therefore, to ensure that the TBS remains unchanged in multiple transmissions of the PSSCH, when calculating the TBS, the actual number of PSFCH symbols may not be used, but the number of PSFCH symbols used for calculating the TBS is determined based on indication information in the first-stage SCI. Detailed description is provided in the next section.

### Sidelink TBS

In certain sidelink communication systems (such as an NR SL system), the PSSCH inherits a TBS determination mechanism of a physical downlink shared channel (PDSCH) and a physical uplink shared channel (PUSCH) in an NR system, that is, the TBS is determined according to a reference value of the number of REs used for the PSSCH in a slot where the PSSCH is located, so that an actual code rate is as close as possible to a target code rate. That is to say, when determining a TBS, such sidelink communication systems do not use the actual number of REs occupied by the PSSCH, but use a reference value of the number of REs of the PSSCH. This is to ensure that the number of REs used for determining the TBS remains unchanged during PSSCH retransmission, so that TBS sizes determined in different transmissions of the PSSCH are the same. The reference value N_RE of the number of REs occupied by the PSSCH may be determined based on Formula (1):
${N}_{RE} = {N}_{RE}^{′} ⋅ {n}_{PRB} - {N}_{RE}^{SCI , 1} - {N}_{RE}^{SCI , 2}$ (1)

In Formula (1) above, n_{PRB} represents the number of PRBs occupied by the PSSCH, ${N}_{RE}^{SCI , 1}$ represents the number of REs occupied by the first-stage SCI ( ${N}_{RE}^{SCI , 1}$ may include the number of REs occupied by a DM-RS of the PSCCH), ${N}_{RE}^{SCI , 2}$ represents the number of REs occupied by the second-stage SCI, and ${N}_{RE}^{′}$ represents the number of reference REs available for the PSSCH in a PRB.${N}_{RE}^{′}$ may be determined based on Formula (2) below:
${N}_{RE}^{′} = {N}_{sc}^{RB} \left({N}_{symb}^{sh}-{N}_{symb}^{PSFCH}\right) - {N}_{oh}^{PRB} - {N}_{RE}^{DMRS}$ (2)

In Formula (2) above, ${N}_{sc}^{RB}$ represents the number of subcarriers in a PRB, and the value of ${N}_{sc}^{RB}$ is generally 12. ${N}_{symb}^{sh}$ represents the number of symbols available for sidelink transmission in one slot. ${N}_{symb}^{sh}$ generally does not include the last symbol (i.e., a GP symbol) and the first symbol (i.e., a symbol used for AGC) of a slot. Taking the slot structure as being ${N}_{symb}^{sh} = 12$ in Fig. 10 as an example. ${N}_{symb}^{PSFCH}$ represents a reference value of the number of symbols occupied by the PSFCH. The value of ${N}_{symb}^{PSFCH}$ may be indicated by a "Number of PSFCH symbols" field in the first-stage SCI. The value of ${N}_{symb}^{PSFCH}$ is generally 0 or 3. ${N}_{oh}^{PRB}$ represents a reference value of the number of REs occupied by phase tracking reference signals (PT-RS) and CSI-RSs. The value of ${N}_{oh}^{PRB}$ may be configured by a radio resource control (RRC) parameter. ${N}_{RE}^{DMRS}$ represents an average number of REs of a DM-RS pattern in one slot. The value of ${N}_{RE}^{DMRS}$ is related to DM-RS patterns supported in a resource pool, as shown in Table 1. Referring to Table 1, when the DM-RS patterns include three patterns {2, 3, 4}, the value of ${N}_{RE}^{DMRS}$ is 18, that is, the average number of REs of the three DM-RS patterns is 18.

Table 1: Correspondence between allowed DM-RS patterns in a resource pool and ${N}_{RE}^{DMRS}$

| DM-RS pattern | ${N}_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

### Sidelink DM-RS

In the NR SL system, the DM-RS pattern of a PSCCH is identical to that of a PDCCH in the NR system, that is, DM-RS is present on every symbol of the PSCCH and is located on REs corresponding to {#1, #5, #9} in a PRB in the frequency domain, as shown in Fig. 12.

The DM-RS sequence of a PSCCH may be generated by Formula (3):
${r}_{l} \left(m\right) = \frac{1}{\sqrt{2}} \left(1-2c\left(m\right)\right) + j \frac{1}{\sqrt{2}} \left(1-2c\left(m+1\right)\right)$ (3)

In Formula (3) above, c(m) denotes a pseudo-random sequence. The pseudo-random sequence may be initialized based on Formula (4) below:
${c}_{init} = \left({2}^{17}\left({N}_{symb}^{slot}{n}_{s , f}^{μ}+l+1\right)\left(2{N}_{ID}+1\right)+2{N}_{ID}\right) mod {2}^{31}$ (4)

In Formula (4) above: 1 denotes an index of a symbol where DM-RS is located within a slot; ${n}_{s , f}^{μ}$ denotes an index of a slot where DM-RS is located within a system frame; ${N}_{symb}^{slot}$ denotes the number of symbols in a slot; N_{ID} ∈ {0,1, ···,65535}. Within a resource pool, the value of N_{ID} may be configured or pre-configured by a network device.

The PSSCH of the NR SL system borrows the design of the NR air interface (i.e., the Uu interface), that is, multiple time-domain PSSCH DM-RS patterns are adopted. Within a resource pool, the number of applicable DM-RS patterns is related to the number of PSSCH symbols in the resource pool (including the first AGC symbol). For given numbers of PSSCH symbols and PSCCH symbols, available DM-RS patterns and the position of each DM-RS symbol in a DM-RS pattern may be determined based on Table 2.

**Table 2: Number and positions of DM-RS symbols included in a slot with different numbers of PSSCH symbols and PSCCH symbols**

| Number of PSSCH symbols (including the first AGC symbol) | DM-RS symbol positions (relative to the position of the first AGC symbol) | | | | | |
|---|---|---|---|---|---|---|
| | Number of PSCCH symbols = 2 | | | Number of PSCCH symbols = 3 | | |
| | Number of DM-RS symbols | | | Number of DM-RS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

Taking the number of symbols of a PSSCH as 13 for example, referring to Fig. 13, when the number of DM-RS symbols is 4, the four DM-RS symbols occupy symbol positions (or symbol indices) 1, 4, 7, and 10 in the slot respectively.

If multiple DM-RS patterns are configured in the time domain within a resource pool, the DM-RS pattern specifically adopted may be selected by a terminal device acting as a transmitting end, and indicated in the first-stage SCI. Such a design allows a terminal device in high-speed motion to select a high-density DM-RS pattern, thereby ensuring accuracy of channel estimation; correspondingly, for a terminal device in low-speed motion, a low-density DM-RS pattern may be adopted, thereby improving spectrum efficiency.

The generation manner of a PSSCH DM-RS sequence is similar to that of a PSCCH DM-RS sequence, and the difference therebetween lies in the value of N_{ID} in the initialization formula (corresponding to Formula (4) above) of the pseudo-random sequence c(m). In the pseudo-random sequence c(m) for generating a PSSCH DM-RS sequence, ${N}_{ID} = {\sum }_{i = 0}^{L - 1} {p}_{i} ⋅ {2}^{L - 1 - i}$. Where pᵢ denotes the i-th bit of cyclic redundancy check (CRC) of a PSCCH scheduling the PSSCH, L denotes the number of bits of the PSCCH CRC, and the value of L is usually 24.

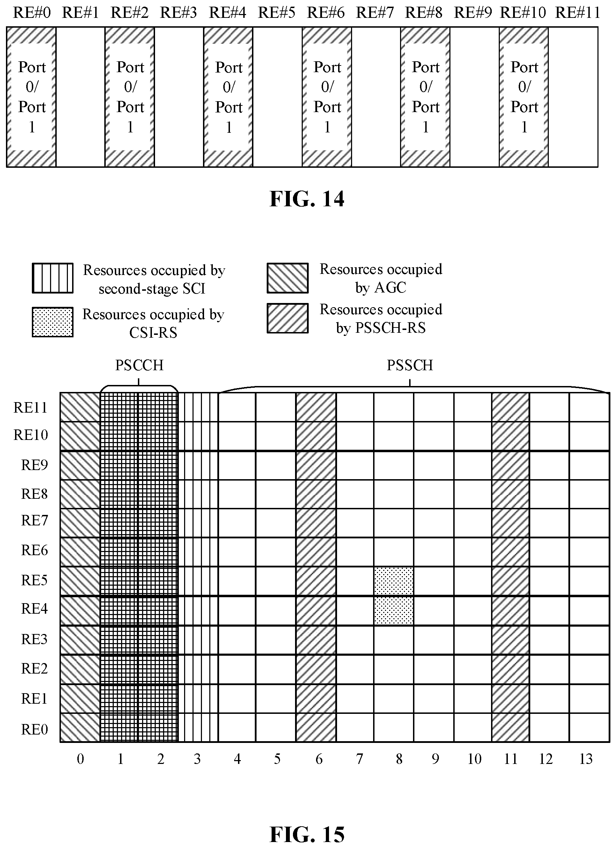

In the NR system, a PDSCH and a PUSCH support two types of frequency-domain DM-RS patterns, namely DM-RS frequency-domain type 1 and DM-RS frequency-domain type 2. Further, for each frequency-domain type of DM-RS, there are two different symbol types: single-symbol and dual-symbol. Single-symbol DM-RS frequency-domain type 1 may support 4 DM-RS ports. Single-symbol DM-RS frequency-domain type 2 may support 6 DM-RS ports. The number of DM-RS ports supported by dual-symbol DM-RS frequency-domain type 1 is twice that supported by single-symbol DM-RS frequency-domain type 1. The number of DM-RS ports supported by dual-symbol DM-RS frequency-domain type 2 is twice that supported by single-symbol DM-RS frequency-domain type 2. However, in some sidelink communication systems (such as the NR SL system), since a PSSCH needs to support at most two DM-RS ports, such communication systems usually only support single-symbol DM-RS frequency-domain type 1, and the frequency-domain pattern of this type of DM-RS is shown in Fig. 14.

### Sidelink CSI-RS

To better support unicast communication, the NR-V2X system supports an SL CSI-RS. It is stipulated in the NR-V2X system that SL CSI-RS is transmitted only when the following three conditions are satisfied.

Condition 1: a terminal device needs to transmit a PSSCH corresponding to an SL CSI-RS, that is, the terminal device cannot transmit only the SL CSI-RS.

Condition 2: sidelink CSI reporting is activated by higher-layer signaling.

Condition 3: when sidelink CSI reporting is activated by higher-layer signaling, sidelink CSI reporting is triggered using corresponding bits in second-stage SCI transmitted by the terminal device.

The maximum number of ports supported by the SL CSI-RS is 2. In the case of two ports, SL CSI-RS of different ports are multiplexed on two adjacent REs of the same sidelink symbol in a code division manner. The number of SL CSI-RSs of each port in one PRB is 1, that is, the density is 1. Therefore, SL CSI-RS appears on at most one sidelink symbol in one PRB, and the specific position of this sidelink symbol is determined by a terminal device transmitting the SL CSI-RS.

Generally, to avoid affecting resource mapping of a PSCCH and second-stage SCI, an SL CSI-RS cannot be located on the same sidelink symbol as the PSCCH and the second-stage SCI.

In addition, since channel estimation accuracy of a sidelink symbol where PSSCH DM-RS is located is high, and an SL CSI-RS of two ports needs to occupy two consecutive REs in the frequency domain, the SL CSI-RS cannot be transmitted on the same sidelink symbol as a DM-RS of a PSSCH.

In some cases, the position of a sidelink symbol occupied by an SL CSI-RS may be indicated by a sl-CSI-RS-FirstSymbol parameter in PC5 RRC. Moreover, the position of a first RE occupied by the SL CSI-RS in a PRB is indicated by a sl-CSI-RS-FreqAllocation parameter in PC5 RRC. If the SL CSI-RS corresponds to one port, the parameter is a bitmap of length 12, corresponding to 12 REs in one PRB. If the SL CSI-RS corresponds to two ports, the parameter is a bitmap of length 6. In this case, the SL CSI-RS occupies two REs which are 2f(1) and 2f(1)+1, where f(1) denotes an identifier of a bit with a value of 1 in the above bitmap.

The frequency-domain position occupied by an SL CSI-RS may be also determined by a terminal device transmitting the SL CSI-RS, and it should be noted that the determined frequency-domain position of the SL CSI-RS cannot conflict with the frequency-domain position occupied by a PT-RS.

Fig. 15 shows a schematic diagram of time-frequency resources occupied by an SL CSI-RS. Referring to Fig. 15, it is assumed that the number of ports corresponding to the SL CSI-RS is 2, sl-CSI-RS-FirstSymbol indicates that the position of a sidelink symbol occupied by the SL CSI-RS is 8, and sl-CSI-RS-FreqAllocation indicates that the position of a first RE occupied by the SL CSI-RS in one PRB is [b5,b4,b3,b2,b1,b0]=[0,0,0,1,0,0].

### Unlicensed Spectrum and Channel Sensing

Unlicensed spectrum is spectrum divided by countries and regions that can be used for communication of radio equipment, and such spectrum is generally regarded as shared spectrum. That is to say, communication equipment in the same or different communication systems may use the spectrum as long as it meets regulatory requirements set by countries or regions on the spectrum, without applying to the government for exclusive spectrum authorization.

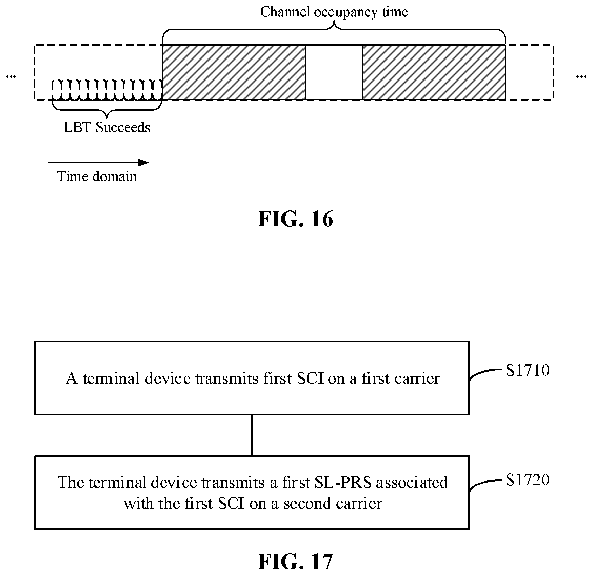

To enable various communication equipment (or communication systems) performing wireless communication using unlicensed spectrum to coexist friendly on the spectrum, some countries or regions have stipulated regulatory requirements to be met for using unlicensed spectrum. For example, communication equipment shall comply with a listen before talk (LBT) rule. The LBT means that communication equipment needs to perform channel sensing before signal transmission on a channel of unlicensed spectrum. If a channel sensing result indicates that the channel is idle, the communication equipment may use the channel of unlicensed spectrum for signal transmission; and if the channel sensing result indicates that the channel is busy, the communication equipment is usually not allowed to use the channel of unlicensed spectrum for signal transmission. To ensure fairness, the duration of signal transmission performed by communication equipment using a channel of unlicensed spectrum in one transmission cannot exceed a maximum channel occupancy time (MCOT). Fig. 16 shows an example of a channel occupancy time obtained by communication equipment after successful LBT on a channel of unlicensed spectrum and signal transmission using resources within the channel occupancy time.

Although channel sensing based on LBT is not a global regulatory requirement, channel sensing can bring benefits of interference avoidance and friendly coexistence for communication transmission between communication systems on shared spectrum. Therefore, in the design process of an NR system on unlicensed spectrum, communication equipment in the system shall support channel sensing. From the perspective of system networking, channel sensing includes two mechanisms: one is LBT based on load based equipment (LBE), also referred to as dynamic channel sensing or dynamic channel occupancy; and the other is LBT based on frame based equipment (FBE), also referred to as semi-static channel sensing or semi-static channel occupancy.

Several different types of LBT manners (i.e., several different types of channel access manners) are mainly described below.

Type 1 LBT manner may also be referred to as multi-slot channel detection with random backoff based on contention window size adjustment. In the Type 1 LBT manner, communication equipment may initiate channel occupancy with a length of Tmcot according to a channel access priority (p). The table below shows channel access priorities and corresponding parameters when a terminal device adopts the Type 1 LBT manner.

**Table 3 Channel access parameters corresponding to different channel priorities**

| Channel access priority (p) | mₚ | CW_{min,p} | CW_{max,p} | T_{mcot,p} | Allowed CWₚ value |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,25 5,511,1023} |
| 4 | 7 | 15 | 1023 | 6 or 10 ms | {15,31,63,127,25 5,511,1023} |

In Table 1 above, mp refers to the number of backoff slots corresponding to a channel access priority (p), CWp refers to the contention window size corresponding to a channel access priority (p), CWmin,p refers to the minimum value of CWp corresponding to a channel access priority (p), CWmax,p refers to the maximum value of CWp corresponding to a channel access priority (p), and Tmcot,p refers to the maximum channel occupancy time length corresponding to a channel access priority (p). Among the four channel access priorities shown in Table 1, p=1 represents the highest priority.

If a network device uses the Type 1 LBT manner, the network device may not only transmit its own data during channel occupancy, but also share channel occupancy time (COT) with a terminal device. Correspondingly, if a terminal device uses the Type 1 LBT manner, the terminal device may not only transmit its own data during channel occupancy, but also share COT with a network device or other terminal devices. The Type 2 LBT manner may be used for resource sharing within COT to perform channel access. The Type 2 LBT manner may also be referred to as a channel access manner based on channel sensing slots with fixed length. The Type 2 LBT manner includes the Type 2A LBT manner, the Type 2B LBT manner, and the Type 2C LBT manner.

In the Type 2A LBT manner, a communication device may perform 25µs channel detection. That is, the communication device may start channel detection 25µs before the start of data transmission. The 25µs channel detection may include one 16µs channel detection and one 9µs channel detection. If both detection results indicate that the channel is idle, the channel may be regarded as idle and channel access may be performed.

In the Type 2B LBT manner, a communication device may perform 16µs channel detection. During channel detection, if the communication device detects that the channel is idle for at least 5µs within 26µs, and the channel is idle for more than 4µs during the last 9µs, the channel may be regarded as idle.

In the Type 2C LBT manner, a communication device may directly transmit data through a channel without performing channel detection. In the Type 2C LBT manner, the time difference between the current transmission and the previous transmission is less than or equal to 16µs. That is, if the time difference between two transmissions is less than or equal to 16µs, the two transmissions may be regarded as one single transmission, and no channel detection is required. It should be noted that in the Type 2C LBT manner, the transmission duration of the communication device is limited, and generally cannot exceed 584µs.

### Channel Access for Transmission(s) on Multiple Channels

When a system supports multiple channels (multiple RB sets), a terminal device needs to perform channel access respectively on multiple channels, i.e., LBT channel sensing. When a downlink multi-channel access mechanism of a new radio unlicensed (NR-U) system is adopted, the terminal device may performing transmission on any channel where channel access succeeds. In a sidelink over unlicensed (SL-U) system, for transmission of a PSFCH and a sidelink synchronization signal block (S-SSB), the following multi-channel access manners are supported:

In Type A multi-channel access, when a terminal device is to transmit a PSFCH or S-SSB on one or more channels (RB sets), the terminal device needs to independently perform a Type 1 channel access (Type 1 LBT manner) procedure on each of the one or more channels. If access succeeds on any one or more of these channels, the terminal device may transmit the PSFCH or S-SSB on the corresponding one or more channels.

In Type B multi-channel access, when a terminal device is to transmit a PSFCH or S-SSB on one or more channels (RB sets), the terminal device may randomly select one channel from the one or more channels to adopt Type 1 channel access, and adopt Type 2 channel access (Type 2 LBT manner) for the remaining channels. The terminal device may transmit on channels where Type 2 channel access succeeds only after Type 1 channel access succeeds; if Type 1 channel access fails, all channels adopting Type 2 channel access are regarded as unavailable.

### Channel Access Parameter Indication (Including Cyclic Prefix Extension (CPE))

In a new radio unlicensed NR-U system, when a terminal device is scheduled to perform transmission of a PUSCH or a physical uplink control channel (PUCCH), a network device may indicate a channel access manner corresponding to the PUSCH or PUCCH by means of downlink control information (DCI) carrying an uplink grant (UL grant) or a downlink grant (DL grant). Since some channel access manners need to meet a gap requirement of 16µs or 25µs, the terminal device may ensure the gap size between two transmissions by transmitting CPE. Correspondingly, the network device may indicate the CPE length of the first symbol of uplink transmission of the terminal device.

The network device may explicitly indicate channel access parameters such as a CPE length, a channel access manner or a channel access priority to the terminal device through joint coding.

The following describes indication manners of introduced channel access parameters under different DCI formats.

### First: fallback uplink grant (DCI format 0_0) for scheduling PUSCH transmission

A set of joint indications of channel access manners and CPE lengths is predefined in the standard, as shown in Table 4 below. The fallback uplink grant includes 2-bit LBT indication information, and the 2-bit LBT indication information is used to indicate the jointly coded channel access manner and CPE length in the set shown in Table 4. The channel access manner and CPE length are used for PUSCH transmission. If the channel access manner is Type 1 channel access, the terminal device may independently select a channel access priority class (CAPC) according to service priority.

### Second: fallback downlink grant (DCI format 1_0) for scheduling PDSCH transmission

A set of joint indications of channel access manners and CPE lengths is predefined in the standard, as shown in Table 4 below. The fallback downlink grant includes 2-bit LBT indication information. The 2-bit LBT indication information is used to indicate the jointly coded channel access manner and CPE length in the set shown in Table 4. The channel access manner and CPE length are used for PUCCH transmission. The PUCCH may carry acknowledge (ACK) or negative acknowledgement (NACK) information corresponding to a PDSCH. If the channel access manner is Type 1 channel access, the terminal device may determine that the CAPC for transmitting the PUCCH is 1.

**Table 4 Joint Indication Set of Channel Access Manner and CPE Length**

| LBT indication | Channel Access Manner | CPE Length |
|---|---|---|
| 0 | Type2C Channel Access | C2*symbol length -16µs-TA |
| 1 | Type2A Channel Access | C3* symbol length -25µs-TA |
| 2 | Type2A Channel Access | C1* symbol length -25µs |
| 3 | Type1 Channel Access | 0 |

In Table 4, the value of C1 is specified by the protocol. When the subcarrier spacing is 15 kHz and 30 kHz, C1 = 1; and when the subcarrier spacing is 60 kHz, C1 = 2. The values of C2 and C3 are configured by higher-layer parameters. When the subcarrier spacing is 15 kHz and 30 kHz, the values of C2 and C3 range from 1 to 28; and when the subcarrier spacing is 60 kHz, the values of C2 and C3 range from 2 to 28.

### Third: non-fallback uplink grant (DCI format 0_1) for scheduling PUSCH transmission

A higher-layer configures an LBT parameter indication set. The LBT parameter indication set includes at least one jointly coded channel access manner, CPE length and CAPC. The non-fallback uplink grant includes LBT indication information, which is used to indicate the jointly coded channel access manner, CPE length and CAPC from the above LBT parameter indication set. The channel access manner, CPE length and CAPC are used for PUSCH transmission. If the indicated channel access manner is Type 2 channel access, the CAPC indicated at the same time is the CAPC used by the network device when obtaining the COT. The LBT indication information includes at most 6 bits.

### Fourth: non-fallback downlink grant (DCI format 1_1) for scheduling PDSCH transmission

A higher-layer configures an LBT parameter indication set. The LBT parameter indication set includes at least one jointly coded channel access manner and CPE length. The non-fallback downlink grant includes LBT indication information, which is used to indicate the jointly coded channel access manner and CPE length from the above LBT parameter indication set. The channel access manner and CPE length are used for PUCCH transmission, wherein the PUCCH may carry ACK or NACK information corresponding to a PDSCH. When the channel access manner is Type 1 channel access, the terminal device may determine that the CAPC for transmitting the PUCCH is 1. The LBT indication information includes at most 4 bits.

In addition to the above explicit indication, the network device may also implicitly indicate a channel access manner within the COT. For example, when the terminal device receives a UL grant or DL grant from the network device, and the UL grant or DL grant indicates that the channel access type corresponding to a PUSCH or PUCCH is Type 1 channel access, and if the terminal device can determine that the transmission time of the PUSCH or PUCCH is within the COT of the network device, the terminal device may update the channel access type corresponding to the PUSCH or PUCCH to Type 2A channel access instead of adopting Type 1 channel access.

In a sidelink transmission scenario, an SL-PRS may be indicated/scheduled based on SCI. At present, resource congestion easily occurs when transmitting an SL-PRS. The resource congestion occurs mainly because SCI and an SL-PRS associated with the SCI are transmitted on the same carrier. That is to say, the SL-PRS and service data occupy the same carrier, which may result in relatively busy transmission within one carrier resource. Especially in scenarios where there are a large number of users, positioning services and data services, carrier resource congestion may even occur, making signal transmission impossible. In addition, when the SCI and the SL-PRS are carried on the same carrier, transmission interference between the SL-PRS and service data may also be caused. Therefore, how to relieve resource congestion is to be addressed.

To solve the above problem, in the embodiments of the present disclosure, SCI and an SL-PRS associated with the SCI may be carried on different carriers for transmission. Such a cross-carrier transmission manner of the positioning reference signal not only helps relieve carrier resource congestion, but also helps avoid mutual interference between the SL-PRS and service data. A sidelink communication method in the embodiments of the present disclosure is described below with reference to Fig. 17.

Fig. 17 is a schematic flowchart of a sidelink communication method proposed in an embodiment of the present disclosure. The terminal device in Fig. 17 may be any type of terminal device supporting sidelink communication, for example, the terminal device 120 in Fig. 1. The method shown in Fig. 17 includes operations S1710 to S1720.

In operation S1710, a terminal device transmits first SCI on a first carrier. The first carrier may also be referred to as a component carrier (CC). The first carrier may be a carrier corresponding to an unlicensed band, or a carrier corresponding to a licensed band or a dedicated band. Transmission of key signaling such as first SCI by using a carrier corresponding to the licensed band or dedicated band (such as an intelligent traffic system (ITS) band) helps improve transmission reliability of the SCI.

The first SCI may refer to any type of SCI associated with a first SL-PRS. For example, the first SCI may be first-stage SCI, or the first SCI may also be second-stage SCI. It should be understood that the association between the first SCI and the first SL-PRS may mean that the first SCI indicates or schedules the first SL-PRS.

In operation S1720, the terminal device transmits the first SL-PRS associated with the first SCI on a second carrier.

The second carrier refers to another carrier different from the first carrier. The second carrier may be a carrier corresponding to a licensed band, or a carrier corresponding to a licensed-free band (also referred to as an unlicensed band or a shared band). That is to say, the first SL-PRS may be transmitted through a licensed band, or the first SL-PRS may be transmitted through an unlicensed band. The unlicensed band has a larger bandwidth, and transmission of an SL-PRS based on the unlicensed band helps improve the accuracy of sidelink positioning.

It can be seen from the above content that in the embodiments of the present disclosure, the first SL-PRS and the first SCI associated with the first SL-PRS are transmitted mainly using different carriers. Such a cross-carrier transmission method of the PRS not only helps relieve carrier resource congestion, but also helps avoid mutual interference between the SL-PRS and service data.

It should be noted that the embodiments of the present disclosure do not specifically limit a manner of determining a resource location (which may include a time-domain resource location and/or a frequency-domain resource location) of the first SL-PRS in the second carrier. For example, it may be determined through one or more of protocol predefinition, network device configuration, pre-configuration and the like. In some implementations, the resource location of the first SL-PRS may be indicated based on the first SCI. It should be understood that the first SCI may explicitly indicate the resource location of the first SL-PRS, or implicitly indicate the resource location of the first SL-PRS. Two possible indication manners are provided below.

### Implementation 1: explicit indication

For example, the first SCI may include one or more information fields. The one or more information fields may be used to indicate a resource location of the first SL-PRS.

In some implementations, the above one or more information fields may be used to indicate one or more of the following: the second carrier; a slot where the first SL-PRS is located; a frequency-domain location of the first SL-PRS in the second carrier; a type of a comb structure used by the first SL-PRS in the frequency domain; and an offset of a resource element (RE) corresponding to the comb structure.

For example, the first SCI may include a first information field. The first information field may include 0 to N1 bits (N1 is a positive integer greater than or equal to 1). When the value of the first information field is 0, it means that the first SCI does not include the first information field. The first information field may indicate the second carrier. For example, the first information field may indicate an index of the second carrier.

For another example, the first SCI may include a second information field. The second information field may include 0 to N2 bits (N2 is a positive integer greater than or equal to 1). When the value of the second information field is 0, it means that the first SCI does not include the second information field. The second information field may indicate a slot where the first SL-PRS is located. For example, the second information field may indicate an index of the slot where the first SL-PRS is located.

For another example, the first SCI may include a third information field. The third information field may include 0 to N3 bits (N3 is a positive integer greater than or equal to 1). When the value of the third information field is 0, it means that the first SCI does not include the third information field. The third information field may indicate a frequency-domain location of the first SL-PRS in the second carrier.

In some implementations, the frequency-domain location of the first SL-PRS in the second carrier includes information such as a resource block set occupied by the first SL-PRS, a comb resource block (a resource block of a comb structure) or an interleaved resource block (a resource block of an interleaved structure) occupied by the first SL-PRS.

That is to say, the third information field may indicate a resource block set occupied by the first SL-PRS in the second carrier, and/or the third information field may indicate a comb resource block or an interleaved resource block occupied by the first SL-PRS in the resource block set. For example, the third information field may indicate an index of a resource block set occupied by the first SL-PRS in the second carrier, and/or the third information field may indicate an index of a comb resource block or an interleaved resource block occupied by the first SL-PRS in the resource block set.

In some implementations, a resource block set occupied by the first SL-PRS in the second carrier may refer to part or all of resource blocks of one or more resource block sets occupied by the first SL-PRS in the second carrier. For example, the third information field may indicate that the first SL-PRS occupies part or all of resource blocks in resource block set 1, and the third information field may also indicate that the first SL-PRS occupies part or all of resource blocks in resource block set 2 and resource block set 3. It should be understood that frequency-domain resources in the second carrier may include multiple resource block sets, and the multiple resource block sets may include, for example, resource block set 1, resource block set 2 and resource block set 3.

For another example, the first SCI may include a fourth information field. The fourth information field may include 0 to N4 bits (N4 is a positive integer greater than or equal to 1). When the value of the fourth information field is 0, it means that the first SCI does not include the fourth information field. The fourth information field may indicate a type of a comb structure (or called a comb structure type) used by the first SL-PRS in the frequency domain. For example, the fourth information field may indicate that the comb structure used by the first SL-PRS in the frequency domain is comb-4 (one RE for the first SL-PRS appears every 4 REs).

For another example, the first SCI may include a fifth information field. The fifth information field may include 0 to N5 bits (N5 is a positive integer greater than or equal to 1). When the value of the fifth information field is 0, it means that the first SCI does not include the fifth information field. The fifth information field may indicate an offset of a RE corresponding to the above comb structure. For example, the fifth information field may indicate that the offset of the RE corresponding to the above comb structure is 0 (that is, the offset of the starting position of a RE for the first SL-PRS in a first OFDM symbol in a resource set occupied by the first SL-PRS relative to a lowest frequency-domain RE occupied by a current slot is 0).

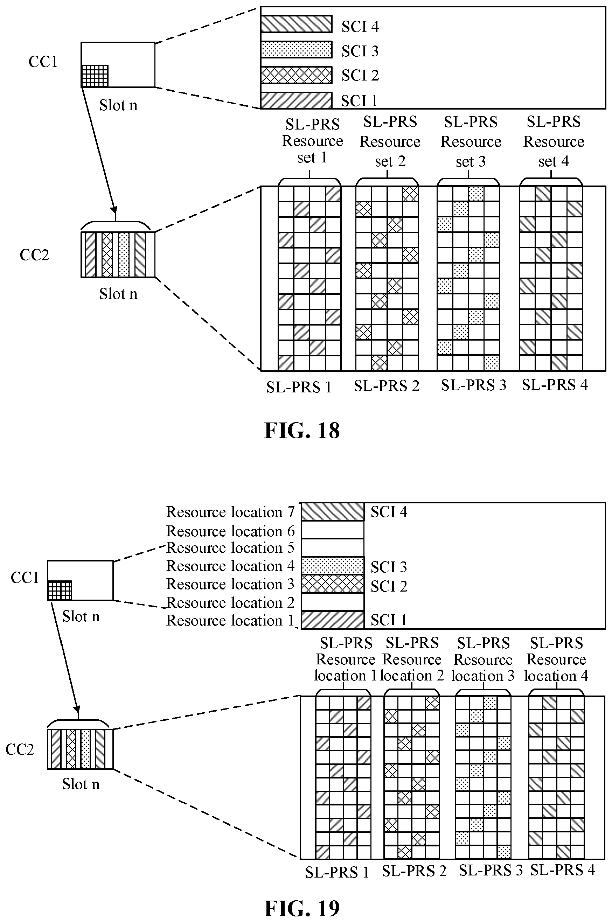

Implementation 1 is described in more detail below with reference to specific examples. It should be noted that the example of Fig. 18 is only intended to help those skilled in the art understand the embodiments of the present disclosure, rather than limiting the embodiments of the present disclosure to the illustrated specific values or specific scenarios. Those skilled in the art can obviously make various equivalent modifications or changes according to the example of Fig. 18 given, and such modifications or changes also fall within the scope of the embodiments of the present disclosure.

As shown in Fig. 18, SCI (the first CCI) may be transmitted in slot n on carrier CC1 (such as the first carrier), and the SCI may be used to indicate/schedule an SL-PRS (such as the first SL-PRS) to be transmitted in slot n on carrier CC2 (such as the second carrier).

Slot n of CC1 includes four pieces of SCI (such as SCI1, SCI2, SCI3 and SCI4), which may be respectively used to correspondingly indicate or schedule four SL-PRSs (such as SL-PRS1, SL-PRS2, SL-PRS3 and SL-PRS4) in slot n of CC2 (such as the second carrier). SL-PRS1, SL-PRS2, SL-PRS3 and SL-PRS4 on slot n of CC2 respectively occupy four SL-PRS resource block sets (SL-PRS resource block set 1, SL-PRS resource block set 2, SL-PRS resource block set 3 and SL-PRS resource block set 4) on CC2, and each resource block set occupied by each SL-PRS corresponds to an independent comb structure type.

With continued reference to Fig. 18, SCI1 may be used to indicate or schedule SL-PRS1, and SCI1 may be used to indicate at least one of the following contents: CC2 where SL-PRS1 is located, slot index n where SL-PRS1 is located, SL-PRS resource set 1 of SL-PRS1 in slot n, comb-4 (one RE for SL-PRS1 appears every 4 REs) which is a comb structure type used by SL-PRS1 in the frequency domain, and an offset 0 of the comb structure type (that is, the offset of the starting position of a RE for the first SL-PRS in a first OFDM symbol in SL-PRS resource set 1 relative to a lowest frequency-domain RE occupied by current slot n is 0).

SCI2 may be used to indicate or schedule SL-PRS2, and SCI2 may be used to indicate at least one of the following contents: CC2 where SL-PRS2 is located, slot index n where SL-PRS2 is located, SL-PRS resource set 2 of SL-PRS2 in slot n, comb-4 which is a comb structure type used by SL-PRS2 in the frequency domain, and an offset 2 of the comb structure type (that is, the offset of the starting position of a RE for the first SL-PRS in a first OFDM symbol in SL-PRS resource set 2 relative to a lowest frequency-domain RE occupied by current slot n is 2).

Similarly, SCI3 may be used to indicate or schedule SL-PRS3, and SCI4 may be used to indicate or schedule SL-PRS4, in a manner similar to that in which SCI1 indicates or schedules SL-PRS1 as described above, which is not described in detail herein.

It should be noted that in the above explicit indication manner, the first SCI and the first SL-PRS may be located in the same slot. The first SCI and the first SL-PRS may also be located in different slots. The present disclosure does not specifically limit this.

### Implementation 2: implicit indication

In Implementation 2, a resource location of the first SL-PRS may be determined based on a resource location of the first SCI. In other words, the resource location of the first SL-PRS has an association relationship with the resource location of the first SCI. The association relationship may be determined through protocol predefinition, network device configuration, pre-configuration or the like. It should be understood that the resource location of the first SL-PRS may include time-domain resource information and/or frequency-domain resource information occupied by the first SL-PRS on the second carrier. The time-domain resource information may include, for example, an OFDM symbol occupied by the first SL-PRS on the second carrier. The frequency-domain resource information may include, for example, a frequency-domain resource set occupied by the first SL-PRS on the second carrier, a type of a comb structure using frequency-domain resources of the first SCI on the second carrier, and the like.

There may be multiple manners of establishing an association relationship between the resource location of the first SL-PRS and the resource location of the first SCI. For example, the resource location of the first SL-PRS may be determined based on the resource location of the first SCI through preset time-domain and/or frequency-domain offsets. For another example, an association may be established between a first index corresponding to the resource location of the first SL-PRS and a second index corresponding to the resource location of the first SCI.

The first index may refer to an index of the resource location itself (such as an index of a resource location of the first SCI on the first carrier), or may refer to other indexes for determining the resource location, such as an index of a sub-channel where the first SL-PRS is located.

In some implementations, the resource location corresponding to the second index includes one or more of the following: a resource location in a first slot; and a resource location in a second slot, wherein the first slot is a slot where the first SCI is located, and the second slot is later than the first slot in the time domain. That is to say, the resource location of the first SCI and the resource location of the first SL-PRS may be located in the same slot or in different slots. For example, when the resource location corresponding to the second index is a resource location in the first slot (such as slot n), the resource location of the first SCI and the resource location of the first SL-PRS are located in the same slot. For another example, when the resource location corresponding to the second index is a resource location in the second slot (such as slot n+1), the resource location of the first SCI and the resource location of the first SL-PRS are located in different slots.

In the embodiments of the present disclosure, the first SL-PRS indicates or schedules the first SL-PRS through cross-slots, so that transmission of the first SL-PRS is more flexible, and sporadic OFDM symbols on different slots may be used in a flexible manner, helping improve resource utilization.

In some implementations, an index of a resource location of the first SL-PRS on the second carrier may be determined based on an index of a starting sub-channel corresponding to the first SCI on the first carrier. It should be understood that the starting sub-channel may refer to a sub-channel with a lowest frequency-domain location among sub-channels corresponding to the first SCI.

In some implementations, the resource location of the first SL-PRS on the second carrier includes but is not limited to one or more of the following: an index of a resource location of the first SL-PRS on the second carrier; an index of a sub-channel where the first SL-PRS is located; a type of a comb structure using frequency-domain resources of the first SL-PRS on the second carrier; and an OFDM symbol occupied by the first SL-PRS in a time domain of the second carrier.

Implementation 2 is described in more detail below with reference to specific examples. It should be noted that the examples in Figs. 19 to 21 are only intended to help those skilled in the art understand the embodiments of the present disclosure, rather than limiting the embodiments of the present disclosure to the illustrated specific values or specific scenarios. Those skilled in the art can obviously make various equivalent modifications or changes according to the examples of Figs. 19 to 21 given, and such modifications or changes also fall within the scope of the embodiments of the present disclosure.

As mentioned above, the index of the resource location of the first SL-PRS may be determined based on the index of the resource location of the first SCI. The implicit indication manner is illustrated in more detail below with reference to Fig. 19. Fig. 19 is an exemplary diagram of an implicit manner of indicating an SL-PRS provided in an embodiment of the present disclosure.

As shown in Fig. 19, in slot n of carrier CC1 (such as the first carrier), resource locations of SCI may include seven frequency-domain resource locations, and the seven resource locations respectively correspond to different SL-PRS resource locations in slot n of carrier CC2 (such as the second carrier), information such as a type of a comb structure used by the SL-PRS in the frequency domain, and the like.

For example, SCI1 occupies resource location 1 on CC1, then resource location 1 occupied by SCI1 may correspond to SL-PRS resource location 1 occupied by SL-PRS1 on CC2, and a comb structure type used by SL-PRS1 in the frequency domain is comb-4 (one RE for SL-PRS1 appears every 4 REs).

For another example, SCI4 occupies resource location 7 on CC1, then resource location 7 occupied by SCI4 may correspond to SL-PRS resource location 4 occupied by SL-PRS4 on CC2, and a comb structure type used by SL-PRS4 in the frequency domain is comb-4.

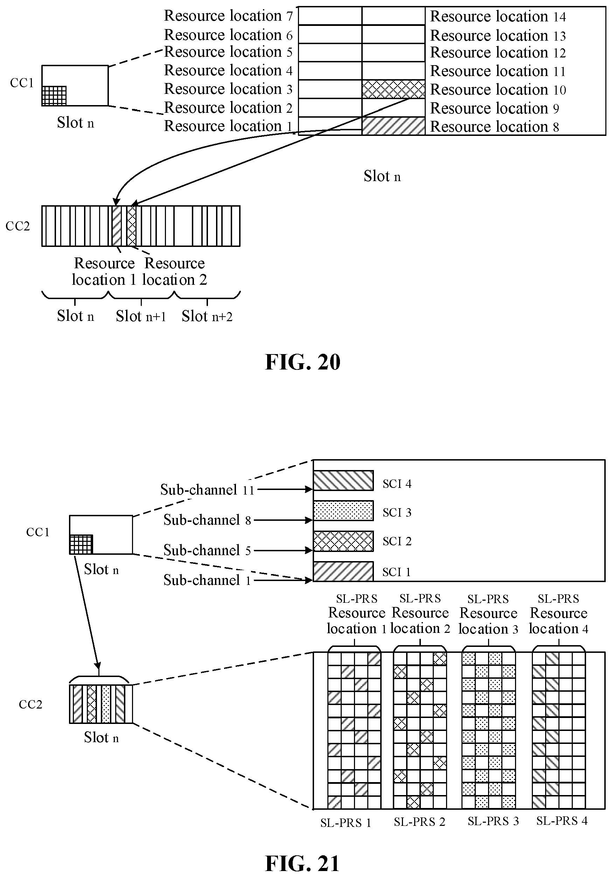

As mentioned above, the first SL-PRS may be used to cross-slot indicate a resource location of the first SCI on the second carrier, that is, the resource location of the first SCI and the resource location of the first SL-PRS may be located in different slots. The implicit indication manner is illustrated in more detail below with reference to Fig. 20. Fig. 20 is an exemplary diagram of an implicit manner of indicating an SL-PRS provided in another embodiment of the present disclosure.

As shown in Fig. 20, in slot n of carrier CC1 (such as the first carrier), resource locations of SCI may include 14 frequency-domain resource locations.

For example, SCI (such as the first SCI) occupies resource location 8 on CC1, then resource location 8 occupied by the SCI may correspond to SL-PRS resource location 1 of an SL-PRS (such as the first SL-PRS) in slot n+1 of carrier CC2 (such as the second carrier).

For another example, SCI occupies resource location 10 on CC1, then resource location 10 occupied by the SCI may correspond to SL-PRS resource location 2 of an SL-PRS in slot n+1 of carrier CC2.

As mentioned above, the index of the resource location of the first SL-PRS on the second carrier may be determined based on the index of a starting sub-channel corresponding to the first SCI on the first carrier. The implicit indication manner is illustrated in more detail below with reference to Fig. 21. Fig. 21 is an exemplary diagram of an implicit manner of indicating an SL-PRS provided in still another embodiment of the present disclosure.

As shown in Fig. 21, an index of a starting sub-channel corresponding to the first SCI on the first carrier may be used to indicate or schedule an index of a resource location of the first SL-PRS on the second carrier, a type of a comb structure using frequency-domain resources of the first SCI on the second carrier, and an OFDM symbol occupied by the first SCI in a time domain of the second carrier.

Slot n of carrier CC1 (such as the first carrier) includes four pieces of SCI (such as SCI1, SCI2, SCI3 and SCI4), and starting sub-channels corresponding to the four pieces of SCI in a frequency domain of CC1 are sub-channel 1, sub-channel 5, sub-channel 8 and sub-channel 11 respectively.

For example, a frequency-domain starting position of SCI1 on CC1 is sub-channel 1, which may be used to indicate or schedule that an SL-PRS resource location index occupied by SL-PRS1 on slot n of CC2 (such as the second carrier) is 1, and a comb structure using frequency-domain resources of SL-PRS1 on CC2 is comb-4 (one RE for SL-PRS1 appears every 4 REs).

A frequency-domain starting position of SCI2 on CC1 is sub-channel 5, which may be used to indicate or schedule that an SL-PRS resource location index occupied by SL-PRS2 on slot n of CC2 is 2, and a comb structure using frequency-domain resources of SL-PRS2 on CC2 is comb-4.

A frequency-domain starting position of SCI3 on CC1 is sub-channel 8, which may be used to indicate or schedule that an SL-PRS resource location index occupied by SL-PRS3 on slot n of CC2 is 3, a comb structure using frequency-domain resources of SL-PRS3 on CC2 is comb-2 (one RE for SL-PRS3 appears every 2 REs), and SL-PRS3 occupies 4 OFDM symbols on CC2.

A frequency-domain starting position of SCI4 on CC1 is sub-channel 11, which may be used to indicate or schedule that an SL-PRS resource location index occupied by SL-PRS4 on slot n of CC2 is 4, a comb structure using frequency-domain resources of SL-PRS4 on CC2 is comb-2, and SL-PRS4 occupies 2 OFDM symbols on CC2.

It can be seen from the above description that, in the embodiments of the present disclosure, key signaling such as SCI may be transmitted by taking advantage of reliability of licensed spectrum/dedicated spectrum resources, and an SL-PRS may be transmitted by using unlicensed spectrum, so as to meet a requirement of high accuracy of sidelink positioning through a large bandwidth.

In the solution, SCI may explicitly or implicitly indicate time-frequency resource locations of SL-PRSs on different component carriers (CCs, such as the second carrier) under a cross-carrier scenario, which greatly improves indication flexibility and reliability of the SCI, and also saves time-frequency resources on licensed spectrum/dedicated spectrum, so that more time-frequency resources on licensed spectrum/dedicated spectrum are available for transmitting service data.

In addition, transmission of a large number of SL-PRSs on unlicensed spectrum facilitates separate transmission of two types of data with different properties, namely SL-PRSs and service data, through different carriers, avoiding mutual interference between the two types of data and also improving resource utilization efficiency.

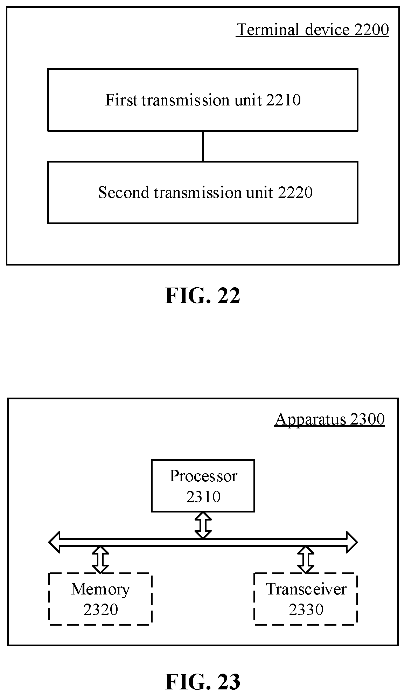

Method embodiments of the present disclosure are described in detail above with reference to Figs. 1 to 21, and apparatus embodiments of the present disclosure are described in detail below with reference to Figs. 22 to 23. It should be understood that the description of the method embodiments corresponds to the description of the apparatus embodiments, and therefore, parts not described in detail may refer to the foregoing method embodiments.

Fig. 22 is a schematic diagram of a terminal device according to an embodiment of the present disclosure. A terminal device 2100 shown in Fig. 22 includes: a first transmission unit 2210 and a second transmission unit 2220.

The first transmission unit 2210 is configured to transmit first SCI on a first carrier.

The second transmission unit 2220 is configured to transmit a first SL-PRS associated with the first SCI on a second carrier.

In some implementations, the first carrier is a carrier corresponding to a licensed band or a dedicated band.

In some implementations, the second carrier is a carrier corresponding to an unlicensed band.

In some implementations, the first SCI includes one or more information fields, and the one or more information fields are configured to indicate a resource location of the first SL-PRS.

In some implementations, the one or more information fields are configured to indicate one or more of the following:
the second carrier;
a slot where the first SL-PRS is located;
a frequency-domain location of the first SL-PRS in the second carrier;
a type of a comb structure used by the first SL-PRS in a frequency domain; and
an offset of a RE corresponding to the comb structure.

In some implementations, the frequency-domain location of the first SL-PRS in the second carrier includes one or more of the following:
a resource block set occupied by the first SL-PRS; and
a comb resource block occupied by the first SL-PRS.

In some implementations, the resource location of the first SL-PRS is determined based on a resource location of the first SCI.

In some implementations, a resource location occupied by the first SCI corresponds to a first index, a resource location occupied by the first SL-PRS corresponds to a second index, and the second index is determined based on the first index.

In some implementations, the resource location corresponding to the second index includes one or more of the following:
a resource location in a first slot; and
a resource location in a second slot;
wherein the first slot is a slot where the first SCI is located, and the second slot is later than the first slot in a time domain.

In some implementations, the first index is determined based on one or more of the following:
an index of the resource location occupied by the first SCI; and
an index of a first sub-channel corresponding to the first SCI.

In some implementations, the first sub-channel is a sub-channel with a lowest frequency-domain location among sub-channels corresponding to the first SCI.

In some implementations, the first SCI and the first SL-PRS are located in a same slot; or
the first SCI and the first SL-PRS are located in different slots.

In some implementations, the first SCI is configured to indicate or schedule the first SL-PRS.

FIG. 23 is a schematic structural diagram of an apparatus according to an embodiment of the present disclosure. A dashed line in FIG. 23 indicates that the unit or module is optional. The apparatus 2300 may be configured to implement the method described in the foregoing method embodiments. The apparatus 2300 may be a chip or a terminal device.

The apparatus 2300 may include one or more processors 2310. The processor 2310 may support the apparatus 2300 in implementing the method described in the foregoing method embodiments. The processor 2310 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor or the processor may also be any conventional processor or the like.

The apparatus 2300 may further include one or more memories 2320. A program is stored in the memory 2320, and the program may be executed by the processor 2310 to cause the processor 2310 to implement the method described in the foregoing method embodiments. The memory 2320 may be independent of the processor 2310 or integrated in the processor 2310.

The apparatus 2300 may further include a transceiver 2330. The processor 2310 may communicate with another device or chip through the transceiver 2330. For example, the processor 2310 may transmit and receive data to and from another device or chip through the transceiver 2330.

An embodiment of the present disclosure further provides a computer-readable storage medium, configured to store a program. The computer-readable storage medium may be applied to the terminal device provided in the embodiment of the present disclosure, and the program may cause a computer to perform the method performed by the terminal device in each embodiment of the present disclosure.

An embodiment of the present disclosure further provides a computer program product. The computer program product includes a program. The computer program product may be applied to the terminal device provided in the embodiment of the present disclosure, and the program may cause a computer to perform the method performed by the terminal device in each embodiment of the present disclosure.

An embodiment of the present disclosure further provides a computer program. The computer program may be applied to the terminal device provided in the embodiment of the present disclosure, and the computer program may cause a computer to perform the method performed by the terminal device in each embodiment of the present disclosure.

It should be understood that the terms "system" and "network" in the present disclosure may be used interchangeably. In addition, the terms used in the present disclosure are only used to explain specific embodiments of the present disclosure, and are not intended to limit the present disclosure. The terms "first", "second", "third", "fourth" and the like in the description, the claims and the drawings of the present disclosure are used to distinguish between different objects and are not used to describe a specific order. Moreover, the terms "include", "comprise" and any other variations thereof are intended to cover non-exclusive inclusion.

In the embodiments of the present disclosure, the "indication" mentioned may be a direct indication, an indirect indication, or an indication of an association relationship. For example, A indicates B may represent that A directly indicates B, for example, B may be obtained through A; may also represent that A indirectly indicates B, for example, A indicates C, and B may be obtained through C; and may also represent that there is an association relationship between A and B.

In the embodiments of the present disclosure, "B corresponding to A" means that B is associated with A, and B may be determined according to A. However, it should also be understood that determining B according to A does not mean that B is determined only according to A, and B may also be determined according to A and/or other information.

In the embodiments of the present disclosure, the term "correspond" may represent a direct correspondence or an indirect correspondence between two parties, may also represent an association relationship between two parties, and may also represent a relationship between indicating and indicated, configurating and configured, or the like.

In the embodiments of the present disclosure, "predefined" or "preconfigured" may be implemented by pre-storing corresponding codes, tables or other manners for indicating relevant information in a device (for example, including a terminal device and a network device), and the present disclosure does not limit a specific implementation manner thereof. For example, predefined may be defined in a protocol.

In the embodiments of the present disclosure, the "protocol" may refer to a standard protocol in the communication field, for example, may include an LTE protocol, an NR protocol, and a related protocol applied to a future communication system, which is not limited in the present disclosure.

The term "and/or" in the embodiments of the present disclosure is merely an association relationship for describing associated objects, indicating that three relationships may exist, for example, A and/or B may indicate the following three cases: A exists alone, A and B exist simultaneously, and B exists alone. In addition, the character "/" herein generally indicates that the associated objects before and after are in an "or" relationship.

In various embodiments of the present disclosure, the sequence numbers of the foregoing processes do not mean an execution sequence, and the execution sequence of each process should be determined based on functions and internal logic thereof, and should not constitute any limitation on an implementation process of the embodiments of the present disclosure.

In several embodiments provided in the present disclosure, it should be understood that the described system, apparatus and method may be implemented in other manners. For example, the apparatus embodiments described above are merely illustrative. For example, the division of the units is only a logical function division, and there may be another division manner in actual implementation, for example, multiple units or components may be combined or integrated into another system, or some features may be ignored or not performed. In addition, the mutual coupling or direct coupling or communication connection shown or discussed may be an indirect coupling or communication connection through some interfaces, apparatuses or units, and may be in an electrical, mechanical or other form.

The units described as separate components may or may not be physically separated, and the components shown as units may or may not be physical units, that is, may be located in one place, or may be distributed to multiple network units. Some or all of the units may be selected according to actual needs to achieve the objectives of the solutions of the embodiments.

In addition, functional units in each embodiment of the present disclosure may be integrated into one processing unit, or each unit may exist alone physically, or two or more units may be integrated into one unit.

In the foregoing embodiments, the implementation may be implemented in whole or in part by software, hardware, firmware or any combination thereof. When implemented by software, the implementation may be implemented in whole or in part in a form of a computer program product. The computer program product includes one or more computer instructions. When the computer program instructions are loaded and executed on a computer, the processes or functions according to the embodiments of the present disclosure are generated in whole or in part. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server or data center to another website, computer, server or data center in a wired (for example, coaxial cable, optical fiber, digital subscriber line (DSL)) or wireless (for example, infrared, wireless, microwave) manner. The computer-readable storage medium may be any available medium that can be read by a computer or a data storage device such as a server or data center including one or more available media integrated therein. The available medium may be a magnetic medium (for example, a floppy disk, a hard disk, a magnetic tape), an optical medium (for example, a digital video disc (DVD)), or a semiconductor medium (for example, a solid state disk (SSD)).

The foregoing descriptions are merely specific implementations of the present disclosure, but the protection scope of the present disclosure is not limited thereto. A person skilled in the art can easily conceive of changes or replacements within the technical scope disclosed in the present disclosure, and all such changes or replacements shall fall within the protection scope of the present disclosure. Therefore, the protection scope of the present disclosure shall be subject to the protection scope of the claims.

## Claims

1. A sidelink transmission method, comprising:
transmitting, by a terminal device, first sidelink control information (SCI) on a first carrier; and
transmitting, by the terminal device, a first sidelink positioning reference signal (SL-PRS) associated with the first SCI on a second carrier.

2. The method according to claim 1, wherein the first carrier is a carrier corresponding to a licensed band or a dedicated band.

3. The method according to claim 1 or 2, wherein the second carrier is a carrier corresponding to an unlicensed band.

4. The method according to any one of claims 1 to 3, wherein the first SCI includes one or more information fields, and the one or more information fields are configured to indicate a resource location of the first SL-PRS.

5. The method according to claim 4, wherein the one or more information fields are configured to indicate one or more of:
the second carrier;
a slot where the first SL-PRS is located;
a frequency-domain location of the first SL-PRS in the second carrier;
a type of a comb structure used by the first SL-PRS in a frequency domain; and
an offset of a resource element corresponding to the comb structure.

6. The method according to claim 5, wherein the frequency-domain location of the first SL-PRS in the second carrier includes one or more of:
a resource block set occupied by the first SL-PRS; and
a comb resource block occupied by the first SL-PRS.

7. The method according to any one of claims 1 to 3, wherein a resource location of the first SL-PRS is determined based on a resource location of the first SCI.

8. The method according to claim 7, wherein a resource location occupied by the first SCI corresponds to a first index, a resource location occupied by the first SL-PRS corresponds to a second index, and the second index is determined based on the first index.

9. The method according to claim 8, wherein the resource location corresponding to the second index includes one or more of:
a resource location in a first slot; and
a resource location in a second slot,
wherein the first slot is a slot where the first SCI is located, and the second slot is later than the first slot in a time domain.

10. The method according to claim 8 or 9, wherein the first index is determined based on one or more of:
an index of the resource location occupied by the first SCI; and
an index of a first sub-channel corresponding to the first SCI.

11. The method according to claim 10, wherein the first sub-channel is a sub-channel with a lowest frequency-domain location among sub-channels corresponding to the first SCI.

12. The method according to any one of claims 1 to 11, wherein
the first SCI and the first SL-PRS are located in a same slot; or
the first SCI and the first SL-PRS are located in different slots.

13. The method according to any one of claims 1 to 12, wherein the first SCI is configured to indicate or schedule the first SL-PRS.

14. A terminal device, comprising:
a first transmission unit, configured to transmit first sidelink control information (SCI) on a first carrier; and
a second transmission unit, configured to transmit a first sidelink positioning reference signal (SL-PRS) associated with the first SCI on a second carrier.

15. The terminal device according to claim 14, wherein the first carrier is a carrier corresponding to a licensed band or a dedicated band.

16. The terminal device according to claim 14 or 15, wherein the second carrier is a carrier corresponding to an unlicensed band.

17. The terminal device according to any one of claims 14 to 16, wherein the first SCI includes one or more information fields, and the one or more information fields are configured to indicate a resource location of the first SL-PRS.

18. The terminal device according to claim 17, wherein the one or more information fields are configured to indicate one or more of:
the second carrier;
a slot where the first SL-PRS is located;
a frequency-domain location of the first SL-PRS in the second carrier;
a type of a comb structure used by the first SL-PRS in a frequency domain; and
an offset of a resource element corresponding to the comb structure.

19. The terminal device according to claim 18, wherein the frequency-domain location of the first SL-PRS in the second carrier includes one or more of:
a resource block set occupied by the first SL-PRS; and
a comb resource block occupied by the first SL-PRS.

20. The terminal device according to any one of claims 14 to 16, wherein a resource location of the first SL-PRS is determined based on a resource location of the first SCI.

21. The terminal device according to claim 20, wherein a resource location occupied by the first SCI corresponds to a first index, a resource location occupied by the first SL-PRS corresponds to a second index, and the second index is determined based on the first index.

22. The terminal device according to claim 21, wherein the resource location corresponding to the second index includes one or more of:
a resource location in a first slot; and
a resource location in a second slot,
wherein the first slot is a slot where the first SCI is located, and the second slot is later than the first slot in a time domain.

23. The terminal device according to claim 21 or 22, wherein the first index is determined based on one or more of the following:
an index of the resource location occupied by the first SCI; and
an index of a first sub-channel corresponding to the first SCI.

24. The terminal device according to claim 23, wherein the first sub-channel is a sub-channel with a lowest frequency-domain location among sub-channels corresponding to the first SCI.

25. The terminal device according to any one of claims 14 to 24, wherein
the first SCI and the first SL-PRS are located in a same slot; or
the first SCI and the first SL-PRS are located in different slots.

26. The terminal device according to any one of claims 14 to 25, wherein the first SCI is configured to indicate or schedule the first SL-PRS.

27. A terminal device, comprising: a transceiver, a memory and a processor, wherein the memory is configured to store a program, and the processor is configured to invoke the program in the memory and control the transceiver to receive or transmit signals to cause the terminal device to perform the method according to any one of claims 1 to 13.

28. An apparatus, comprising a processor, configured to invoke a program from a memory to cause the apparatus to perform the method according to any one of claims 1 to 13.

29. A chip, comprising a processor, configured to invoke a program from a memory to cause a device on which the chip is mounted to perform the method according to any one of claims 1 to 13.

30. A computer-readable storage medium, having a program stored thereon that causes a computer to perform the method according to any one of claims 1 to 13.

31. A computer program product, comprising a program that causes a computer to perform the method according to any one of claims 1 to 13.

32. A computer program, causing a computer to perform the method according to any one of claims 1 to 13.
